# FASCICULE DE BREVET EUROPEEN

(11) **EP 3 277 855 B1**
(45) Date de publication et mention de la délivrance du brevet: **06.05.2020**
(21) Numéro de dépôt: 16771463.3
(22) Date de dépôt: 23.03.2016
(51) Int. Cl.: C22C 33/02, C22C 1/10, C22C 29/12, C22C 32/00, C25C 3/06, C25C 3/12, C25C 5/04, C25C 7/00, C25C 7/02, H01H 1/021, H01H 1/025, H01H 1/04, H01H 1/0237

(54) **MATÉRIAU CERMET D'ELECTRODE**
CERMETELEKTRODENMATERIAL
CERMET ELECTRODE MATERIAL

(30) Priorité: 03.04.2015 FR 1500694
(43) Date de publication de la demande: 07.02.2018
(73) Titulaire: Elysis Limited Partnership, Montreal, QC H3B 3M5 (CA)
(72) Inventeur: BARTHELEMY, Christian, 38500 Voiron (FR); MARMOTTANT, Ariane, 38140 Charnecles (FR); LAURENT, Véronique, 38120 Saint Egrève (FR); BOUVET, Sylvie, 38470 Vinay (FR); STABROWSKI, Vincent, 38000 Genoble (FR)
(74) Mandataire: Cabinet Beau de Loménie
(86) Numéro de dépôt international: PCT/IB2016/000445
(87) Numéro de publication internationale: WO 2016/156973

(56) Documents cités:
- WO-A1-01/31090
- WO-A2-2004/082355
- WO-A2-2005/035813
- CN-B- 102 732 769
- FR-A1- 2 533 591
- FR-A1- 2 852 331
- US-A- 4 374 050
- US-A- 4 871 438
- US-A1- 2003 070 937
- FABIEN RIOULT ET AL: "High-Temperature Oxidation of a Cu-Ni Based Cermet: Kinetic and Microstructural Study", JOURNAL OF THE AMERICAN CERAMIC SOCIETY., vol. 89, no. 3, 1 mars 2006 (2006-03-01), pages 996-1005, XP055247412, US ISSN: 0002-7820, DOI: 10.1111/j.1551-2916.2005.00898.x

## Description

L'invention concerne les matériaux d'électrode, et plus particulièrement les matériaux cermet utilisés dans la composition de matériau d'anodes destinées à la production d'aluminium par électrolyse. Elle concerne plus précisément les matériaux cermet utilisés pour la fabrication d'anodes dites « inertes » ou « non-consommables ».

La description qui suit se réfère plus spécifiquement à l'utilisation du matériau cermet, objet de la présente invention, utilisé dans la composition du matériau d'anode inerte destinée à la fabrication de l'aluminium par un procédé d'électrolyse ignée. Cependant, la mention de cette application industrielle dans la description ne limite en aucun cas la portée de l'invention. La présente invention peut concerner d'autres applications industrielles du matériau cermet décrit ci-après.

L'aluminium métal est produit industriellement par électrolyse ignée, à savoir par réduction électrolytique de l'alumine en solution dans un bain à base de cryolithe fondue, appelé bain d'électrolyse, selon le procédé de Hall-Héroult. La réduction électrolytique est effectuée dans des cellules d'électrolyse comprenant une cuve d'électrolyse, munie d'éléments cathodiques en carbone, et une ou plusieurs anodes. Le bain d'électrolyse est contenu dans la cuve et les anodes sont partiellement immergées dans le bain d'électrolyse. Le courant d'électrolyse permet de maintenir le bain d'électrolyse à la température requise par effet Joule. La cellule d'électrolyse est régulièrement alimentée en alumine de manière à compenser la consommation d'alumine produite par la réaction d'électrolyse.

Dans la technologie standard, les anodes sont en matériau carboné et l'électrolyse est effectuée à une température typiquement de l'ordre de 950°C. Les anodes en matériau carboné étant progressivement consommées lors de l'électrolyse, il faut réajuster en continu la hauteur de la partie des anodes qui est immergée dans le bain et intervenir sur la cellule pour effectuer le remplacement des anodes.

En outre, la consommation des anodes :
- produit du gaz carbonique (plus de deux tonnes de dioxyde de carbone par tonne d'aluminium produit), ce qui contribue à l'effet de serre, et
- rejette du dioxyde de soufre du fait de la présence de soufre dans les matières premières utilisées pour la fabrication de l'anode.

Le développement d'une technologie d'électrolyse de l'alumine utilisant des anodes « inertes » ou « non-consommables » cherchant à résoudre ces inconvénients se heurte inévitablement à la difficulté de réaliser des anodes répondant à différents critères de qualité antagonistes.

En effet, les anodes doivent être suffisamment conductrices à la température d'utilisation de façon à ne pas augmenter de manière inappropriée la consommation électrique liée à cette technologie.

Par ailleurs, les anodes doivent résister à la corrosion dans des bains cryolithiques agressifs de façon à avoir une durée de vie suffisante et, de manière à éviter la contamination de l'électrolyte et de l'aluminium en éléments indésirables.

Enfin les anodes doivent être manipulables. Cela impose certaines propriétés mécaniques : des anodes fragiles seraient inutilisables dans des procédés industriels.

Afin de satisfaire ces critères énoncés ci-dessus, à savoir de conductivité, de résistance à la corrosion, ainsi que de solidité, on a proposé d'utiliser des pièces céramiques monolithiques pour la fabrication de ces anodes inertes.

Par exemple, les demandes de brevet WO02/066710, WO02/083992 et US2004/089558 décrivent différentes compositions d'oxydes susceptibles de permettre la réalisation d'anodes inertes céramiques, pour lesquelles la quantité de phase métallique est en général inférieure à 10 % en poids. Cependant la conductivité électrique de ce type d'anode et leurs propriétés mécaniques s'avèrent insuffisantes.

Par ailleurs, on a également proposé d'utiliser des pièces entièrement métalliques pour la fabrication de ces anodes inertes. Par exemple, les demandes de brevet WO99/36591 et WO00/06803 décrivent de telles anodes inertes qui sont entièrement métalliques. Cependant, la résistance à la corrosion de ces anodes dans les bains cryolithiques reste insuffisante.

Enfin, on a proposé d'utiliser comme matériaux d'électrode des matériaux composites à matrice céramique contenant une ou plusieurs phases métalliques, de façon à combiner les avantages respectifs de la phase métallique et de la phase céramique. De tels matériaux composites, qui contiennent au moins une phase céramique et au moins une phase métallique, sont connus sous la dénomination « matériau cermet ».

Les phases métalliques de ces matériaux cermet permettent d'améliorer les propriétés mécaniques des électrodes ainsi que leur conductivité, tandis que les phases céramiques permettent d'améliorer la résistance à la corrosion dans les bains cryolithiques.

Cependant, le manque de stabilité des différentes phases métallique et céramique au cours d'un passage prolongé de telles anodes en matériau cermet dans les bains cryolithiques tend à limiter leur durée de vie et à provoquer la contamination de l'électrolyte et de l'aluminium.

De nombreuses demandes de brevet concernent ce type d'anode en matériau cermet.

Par exemple, on peut citer la demande internationale WO2004/082355 qui décrit un procédé de fabrication d'une anode inerte en cermet de type NiO-NiFe₂O₄-M comprenant au moins une phase monoxyde de nickel N, une phase spinelle de nickel S contenant du fer et du nickel, et une phase métallique M contenant du cuivre et du nickel, ledit procédé étant caractérisé en ce qu'il comprend :
- la préparation d'un mélange initial incluant au moins un précurseur desdites phases monoxyde N et spinelle S, un précurseur de la phase métallique M et un liant organique, la proportion de liant organique dans le mélange initial étant inférieure à 2,0 % en poids et le précurseur de la phase métallique comprenant une poudre métallique contenant du cuivre et du nickel,
- une opération de mise en forme du mélange, de manière à former une anode crue de forme déterminée,
- une opération de frittage de l'anode crue à une température supérieure à 900 °C dans une atmosphère contrôlée contenant au moins un gaz inerte et de l'oxygène.

Ce procédé qui améliore la fabrication de l'anode en permettant de réduire la quantité de liant ne résout pas entièrement le problème de stabilité de l'anode dans le bain cryolithique. Il a été notamment constaté que la conductivité électrique de la phase spinelle de nickel NiFe₂O₄ diminuait en cours d'électrolyse, ce qui conditionnait la durée de vie de l'anode.

La demande internationale WO2005/035813 décrit un procédé de fabrication d'anode contenant un matériau cermet dans lequel l'un des constituants de l'oxyde est un élément métallique susceptible d'être réduit en tout ou partie lors d'une opération de réduction au cours du procédé de fabrication. Ce procédé qui améliore la fabrication de l'anode en permettant de réduire l'exsudation de métal ne résout pas non plus entièrement le problème de stabilité de l'anode dans le bain cryolithique.

La demande internationale WO01/31090 décrit une anode inerte en cermet comprenant une phase céramique représentée par la formule NiₓFe_{2y}M_{z}O_{(3y+x+z) ± δ}, où M représente au moins un métal choisi parmi Zn, Co, Al, Li, Cu, Ti, V, Cr, Zr, Nb, Ta, W, Mb, Hf et des terres rares, de préférence Zn et/ou Co, x est compris entre 0,1 et 0,99, y est compris entre 0,0001 et 0,9, z est compris entre 0,0001 et 0,5, et δ est compris entre 0 et environ 0,03. Cette anode inerte en cermet contient également une phase métallique, telle que Cu, Ag, Pd, Pt, Au, Rh, Ru, Ir et/ou Os. Une durée de vie compatible avec des conditions d'utilisation industrielles n'est pas démontrée pour ce type d'anode.

Ainsi, on relève que les matériaux d'électrode, et en particulier les matériaux cermet, connus de l'état de l'art ne sont pas pleinement satisfaisants en tant que matériaux entrant dans la composition du matériau des anodes inertes destinées à la production d'aluminium qui fonctionnent de manière optimale (c'est-à-dire à moindre consommation électrique) et avec une durée de vie acceptable d'un point de vue industriel.

La présente invention se propose de surmonter les inconvénients détaillés ci-dessus que présentent les matériaux d'électrode, en particulier les matériaux cermet, connus de l'état de l'art.

En effet, les inventeurs de la présente invention ont mis au point de manière tout à fait surprenante un nouveau matériau cermet, destiné à être utilisé dans la composition du matériau d'une anode inerte élaborée pour la production d'aluminium et qui concilie les paramètres suivants :
- une robustesse et une résistance au choc thermique supérieures aux formulations de matériaux cermet déjà connues, et ce du fait d'une proportion de métal plus importante ;
- une conductivité électrique améliorée par rapport aux matériaux cermet connus de l'état de l'art ;
- une résistance à la corrosion très satisfaisante : aucune usure géométrique mesurable jusqu'à 506 heures d'électrolyse n'est constatée avec le matériau cermet selon l'invention ;
- le matériau cermet selon l'invention n'induit pas de perte de métal tel que le nickel qui serait susceptible de polluer l'aluminium produit lors de l'électrolyse à un niveau tel qu'il ne serait pas commercialisable ;
- une résistance à des densités de courant élevées, à savoir un comportement adéquat à 1,2 A/cm² ;
- une résistance à l'oxydation à 930 °C en aérien remarquable.

Le matériau cermet selon l'invention comprend, en pourcentages massiques, au moins :
- 50 % à 90 %, de préférence 60 % à 80 %, d'une phase métallique qui contient au moins un alliage de cuivre (Cu) et de nickel (Ni), ledit alliage comprenant en pourcentages massiques :
   - 35 % à 75 %, de préférence 40 % à 60 %, plus préférentiellement 45 % à 55 %, de nickel,
   - 25 % à 65 %, de préférence 40 % à 55 %, plus préférentiellement 45 % à 55 %, de cuivre,
- 10 % à 50 %, de préférence de 20 % à 40 %, d'une phase d'oxyde (2,5) comprenant :
- une phase monoxyde (5) de composition NiₓM_{y}Fe_{1-x-y}O avec les proportions massiques suivantes :
   - 0,3 % ≤ Ni ≤ 17 %,
   - 60 % ≤ Fe ≤ 78 %,
   - 0 ≤ M ≤ 10%,
   et/ou
- une phase d'oxyde de ferrite de nickel (2) de composition NiₓM_{y}Fe_{3-x-y}O₄ avec les proportions massiques suivantes :
   - 0,2% ≤ Ni ≤ 13%,
   - 60 % ≤ Fe ≤ 72 %,
   - 0 ≤ M ≤ 8 %,

M étant un métal choisi parmi l'aluminium (Al), le cobalt (Co), le chrome (Cr), le cuivre (Cu), le manganèse (Mn), le titane (Ti), le zirconium (Zr), l'étain (Sn), le vanadium (V), le niobium (Nb), le tantale (Ta), l'yttrium (Y), l'hafnium (Hf), ou une combinaison de ces métaux.

Dans la phase d'oxyde du matériau cermet selon l'invention, le nickel est présent en faible quantité par rapport aux autres métaux formant la phase oxyde et notamment par rapport au fer.

Le fer peut être le seul autre métal en complément du nickel dans la phase d'oxyde, auquel cas la proportion massique de fer dans la phase d'oxyde est la suivante : 60 % ≤ Fe ≤ 78 %. Le fer est ainsi fortement prédominant par rapport au nickel.

La phase d'oxyde contient en outre au moins un métal (M) qui est choisi parmi l'aluminium (Al), le cobalt (Co), le chrome (Cr), le cuivre (Cu), le manganèse (Mn), le titane (Ti), le zirconium (Zr), l'étain (Sn), le vanadium (V), le niobium (Nb), le tantale (Ta), l'yttrium (Y), l'hafnium (Hf) ou une combinaison de ces métaux. Ces métaux M prennent la place du fer dans la structure de l'oxyde de la phase oxyde. Ils sont plus particulièrement présents en faibles quantités dans la phase d'oxyde par rapport au fer et choisis avantageusement pour améliorer la conductivité de la phase d'oxyde, le frittage du matériau cermet et/ou la résistance à la corrosion par le bain cryolithique.

La phase d'oxyde du matériau cermet selon l'invention peut comprendre :
- une phase monoxyde de composition NiₓM_{y}Fe_{1-x-y}O avec les proportions massiques suivantes :
   - 0,3 % ≤ Ni ≤ 17 %,
   - 60 % ≤ Fe ≤ 78 %,
   - 0 ≤ M ≤ 10%,
   et/ou
- une phase d'oxyde de ferrite de nickel de composition NiₓM_{y}Fe_{3-x-y}O₄ avec les proportions massiques suivantes :
   - 0,2% ≤ Ni ≤ 13%,
   - 60 % ≤ Fe ≤ 72 %,
   - 0 ≤ M ≤ 8 %.

A titre indicatif, les fourchettes de proportions massiques de Ni et de Fe mentionnées ci-dessus peuvent encore s'exprimer lorsque :
- la phase d'oxyde comprend une phase monoxyde de composition NiₓFe₁₋ₓO qui ne comporte pas de métal M (y = 0) par : 0,004 ≤ x ≤ 0,2,
- la phase d'oxyde comprend une phase d'oxyde de ferrite de nickel de composition NiₓFe₃₋ₓO₄ qui ne comporte pas de métal M (y = 0) par : 0,01 ≤ x ≤ 0,5.

La phase d'oxyde de ferrite de nickel du matériau cermet a une structure spinelle. Par structure spinelle, on entend une structure cristalline de composition de type AB2O4 où A est un cation en site tétraédrique (entouré de 4 oxygènes) et B sont deux cations en sites octaédriques (entouré de 6 oxygènes). Ce type de structure cubique compact est particulièrement avantageux dans des conditions agressives telles qu'un bain cryolithique pour la production d'aluminium.

Dans le matériau cermet selon l'invention, la phase métallique et la phase d'oxyde sont percolantes, à savoir que les réseaux formés par la phase d'oxyde et la phase métallique sont intimement entrelacés et traversent le matériau cermet de manière continue. Cela présente l'avantage que le matériau cermet selon l'invention conserve une bonne tenue au cours du temps.

De manière préférée, lorsque la phase d'oxyde du matériau cermet comprend une phase d'oxyde de ferrite de nickel, ladite phase d'oxyde de ferrite de nickel est de composition NiₓM_{y}Fe_{3-x-y}O₄ avec les proportions massiques suivantes :
- 0,2 % ≤ Ni ≤ 10 %, préférentiellement 0,2 % ≤ Ni ≤ 5 % ;
- 63 % ≤ Fe ≤ 72 %, préférentiellement 68 % ≤ Fe ≤ 72 %,
- 0 ≤ M ≤ 4 %, préférentiellement 0 ≤ M ≤ 2 %.

A titre indicatif, ces fourchettes de proportions massiques de Ni et de Fe mentionnées ci-dessus peuvent encore s'exprimer lorsque la phase d'oxyde comprend une phase d'oxyde de ferrite de nickel de composition NiₓFe₃₋ₓO₄ qui ne comporte pas de métal M (y = 0) par : 0,01 ≤ x ≤ 0,3, et préférentiellement 0,01 ≤ x ≤ 0,1.

De manière avantageuse, lorsque la phase d'oxyde du matériau cermet comprend une phase monoxyde, ladite phase monoxyde est de composition NiₓM_{y}Fe_{1-x-y}O avec les proportions massiques suivantes :
- 0,3 % ≤ Ni s 13 %, préférentiellement 0,3 % ≤ Ni ≤ 8 % ;
- 65 % ≤ Fe ≤ 78 %, préférentiellement 70 % ≤ Fe ≤ 78 %,
- 0 ≤ M ≤ 4 %, préférentiellement 0 ≤ M ≤ 2 %.

A titre indicatif, ces fourchettes de proportions massiques de Ni et de Fe mentionnées ci-dessus peuvent encore s'exprimer lorsque la phase d'oxyde comprend une phase monoxyde de composition NiₓFe₁₋ₓO par: 0,004 ≤ x ≤ 0,16, et préférentiellement 0,004 ≤ x ≤ 0,1.

Dans un mode de réalisation de l'invention, la phase métallique du matériau cermet comprend en outre au moins une terre rare, de préférence une terre rare choisie parmi l'yttrium (Y), le cérium (Ce), le lanthane (La) et le néodyme (Nd).

La terre rare peut représenter jusqu'à 5 % de la masse de la phase métallique. Plus préférentiellement, ce pourcentage massique en terre rare est inférieur ou égal à 2 %. La présence de la terre rare dans la phase métallique améliore la qualité des joints de grains et évite ainsi qu'il se forme des fluorures ou des oxyfluorures solubles qui pourraient contaminer le bain cryolithique.

Compte tenu de la forte proportion de la phase métallique dans le matériau cermet selon l'invention, la conductivité électrique est proche de celle d'un métal tant dans son évolution avec la température que pour la valeur atteinte. La conductivité à température ambiante est comprise entre 4000 à 5000 S/cm, et à une température de 1000 °C, elle est comprise entre 2000 à 3000 S/cm.

Avec la composition spécifique du matériau cermet selon l'invention qui a été décrite ci-dessus, ledit matériau cermet présente l'avantage qu'il se forme à la surface dudit matériau cermet une couche protectrice et adhérente de ferrite de nickel d'une épaisseur comprise entre environ 15 µm et 30 µm, dès le début de l'électrolyse lorsque le matériau cermet est utilisé dans la composition du matériau d'une anode inerte qui est immergée dans un bain cryolithique ou bien lors d'un traitement consistant en une pré-oxydation (par exemple sous air entre 900 et 1000 °C, pendant une durée de préférence comprise entre environ 2 et 10 heures) de l'anode inerte comprenant ce matériau cermet et qui est réalisé avant son utilisation au cours d'une électrolyse.

Cette couche protectrice a une composition qui tend vers la composition Ni_{0,9}M_{y}Fe_{2,1-y}O₄. Et, au cours de l'électrolyse, du fait de la mise en équilibre avec le bain cryolithique contenant de l'alumine en surface de l'anode, la couche protectrice d'une phase d'oxyde ne comportant initialement pas de métal M (y = 0) tend vers la composition Ni_{0,9}Fe₂Al_{0,1}O₄. Cette phase de ferrite de nickel est moins conductrice que la phase d'oxyde du matériau cermet mais elle est plus stable, moins soluble dans le bain cryolithique et se maintient ainsi en surface de l'anode.

C'est pourquoi, l'invention a aussi pour objet un matériau cermet traité susceptible d'être obtenu après un traitement de pré-oxydation d'un matériau cermet tel que décrit ci-dessus. De manière avantageuse, le traitement de pré-oxydation est réalisé sous air entre 900 °C et 1000 °C pendant une durée comprise entre environ 2 et 10 heures. Le traitement de pré-oxydation a donc uniquement pour effet de former à la surface du matériau cermet la couche protectrice de ferrite de nickel telle que décrite ci-dessus.

Un autre objet de l'invention est ainsi un matériau cermet traité qui se caractérise en ce qu'il s'agit d'un matériau cermet tel que décrit ci-dessus et qui est revêtu en totalité ou partiellement d'une couche protectrice de composition Ni_{0,9}M_{y}Fe_{2,1-y}O₄, l'épaisseur de cette couche protectrice étant avantageusement comprise entre environ 15 et 30 µm.

Ainsi, dans le cadre de la présente invention, par « matériau cermet selon l'invention », il s'agit aussi bien du matériau cermet tel que décrit ci-dessus que du matériau cermet traité qui vient juste d'être décrit et qui se distingue du matériau cermet uniquement par le fait qu'il comporte en outre une couche protectrice de ferrite de nickel.

Le matériau cermet selon l'invention comprend une quantité importante de phase métallique qui constitue un réservoir d'espèces métalliques, notamment de nickel. De plus, la phase d'oxyde du matériau cermet est riche en fer et de faible teneur en nickel.

C'est pourquoi, la couche protectrice de ferrite de nickel en surface du matériau cermet selon l'invention se régénère en permanence tout au long de l'électrolyse du fait de l'approvisionnement en nickel provenant de l'intérieur du matériau cermet et de la dissolution de ce même nickel dans la phase oxyde. L'environnement oxydant en surface du matériau cermet et riche en nickel autour du ferrite de nickel très riche en fer tend à déplacer la stœchiométrie du ferrite de nickel vers un équilibre où le ferrite de nickel comporte une proportion plus importante de nickel, proche de Ni_{0,9}M_{y}Fe_{2,1-y}O₄.

En d'autres termes, la phase d'oxyde du matériau cermet qui peut être un oxyde de ferrite de nickel et/ou un monoxyde donne lieu dans des conditions oxydantes (électrolyse et/ou un traitement de pré-oxydation tel que mentionné ci-dessus) à la formation en surface d'une couche protectrice de ferrite de nickel riche en nickel qui est adhérente, cohérente et qui se renouvelle en permanence durant l'électrolyse.

Au cours de l'électrolyse, la phase d'oxyde du matériau cermet selon l'invention qui est à faible teneur en nickel a tendance à être attaquée par l'électrolyte. C'est pourquoi, cette phase d'oxyde à faible teneur en nickel doit être en contact direct avec la phase métallique du matériau cermet afin de permettre une alimentation rapide en nickel depuis la phase métallique lorsque cette phase métallique est oxydée.

La forte proportion de la phase métallique dans le matériau cermet selon l'invention lui confère une très bonne conductivité électrique lorsqu'il est utilisé en tant que matériau d'anode inerte que cela soit après un traitement de pré-oxydation tel que décrit ci-dessus ou bien directement dans le bain cryolithique d'électrolyse.

De plus, cette forte teneur de la phase métallique dans le matériau cermet assure le maintien de la conductivité lorsque la composition du matériau cermet se modifie au cours de l'électrolyse, et ce du fait de la mise en équilibre des phases qu'il comprend.

La limite supérieure de la teneur en la phase métallique du matériau cermet selon l'invention est choisie de manière appropriée pour que ladite phase métallique ne nuise pas à la régénération rapide à partir de la phase oxyde de la couche protectrice de ferrite de nickel décrite ci-dessus ; une teneur trop importante de cette phase métallique entraînerait un risque de passivation par formation de fluorures de nickel et/ou la dissolution d'oxyde de cuivre.

Par ailleurs, la limite inférieure de la teneur en la phase métallique du matériau cermet selon l'invention est choisie de manière appropriée pour que la phase métallique soit présente de manière à occuper largement le volume dudit matériau cermet. La phase métallique constitue une phase percolante qui est donc en contact direct avec la phase d'oxyde afin de permettre une alimentation rapide en nickel de cette phase d'oxyde. La phase métallique constitue en outre un réservoir important en nickel pour assurer la régénération de la couche protectrice de ferrite de nickel sur une durée importante, à savoir une durée qui correspond au moins aux durées d'utilisation d'anode inerte dans des bains cryolithiques au cours d'électrolyse pour la production d'aluminium.

Cette limite inférieure de la teneur en la phase métallique dans le matériau cermet est choisie aussi de manière adéquate pour assurer une bonne conductivité électrique du matériau cermet selon l'invention.

La phase métallique du matériau cermet selon l'invention comprend au moins un alliage de nickel et de cuivre. Dans cet alliage, le nickel s'oxyde avant le cuivre et vient donc enrichir la phase d'oxyde du matériau cermet selon l'invention ; ce qui permet la formation de la couche protectrice de ferrite de nickel en surface de l'anode qui est très résistante au bain cryolithique. Le nickel protège aussi le cuivre de l'oxydation.

L'enrichissement en nickel de la couche protectrice de ferrite de nickel pour combler son déficit en nickel permet de :
- limiter la pollution du bain cryolithique et de l'aluminium produit au cours de l'électrolyse avec du nickel qui se serait oxydé et qui se serait dissout dans ledit bain en l'absence de la formation de cette couche protectrice, et
- éviter une passivation de l'anode inerte par formation de couches denses non conductrices de NiO.

La limite inférieure de la teneur massique en nickel dans l'alliage de cuivre et de nickel est choisie de manière appropriée pour que le nickel de la phase métallique du matériau cermet selon l'invention puisse s'oxyder sur de longues périodes, induisant ainsi une durée d'utilisation du matériau cermet tout à fait adéquate d'un point de vue industriel, et notamment pour son utilisation dans un bain cryolithique au cours d'une électrolyse pour la production d'aluminium.

Le cuivre de la phase métallique qui est un élément plus noble que le nickel va demeurer dans la phase métallique du matériau cermet sur de longues durées ; ce qui permet de disposer de conditions réductrices parfaitement propices pour le maintien de la composition de la phase d'oxyde, et ce à un équilibre qui assure un bon compromis entre la résistance au bain cryolithique et la conductivité électrique du matériau cermet selon l'invention.

La quantité de cuivre dans la phase métallique du matériau cermet selon l'invention est choisie de manière adéquate pour que le cuivre soit présent tout au long de l'électrolyse, mais en quantité suffisamment faible pour éviter la fusion de la phase métallique au cours de l'élaboration du matériau cermet selon l'invention lorsqu'il est fabriqué par métallurgie des poudres.

Dans un mode de réalisation de l'invention, du fer peut-être présent dans la composition de l'alliage de cuivre et de nickel de la phase métallique du matériau cermet avant son utilisation en tant que matériau d'anode d'inerte au cours de l'électrolyse.

La teneur massique en fer dans la phase métallique du matériau cermet doit être faible, à savoir inférieure à 20 % et avantageusement comprise entre 2 et 15 %, préférentiellement entre 4 et 10 %.

Cette faible teneur de fer dans la phase métallique peut résulter de la mise en équilibre des phases du matériau cermet au cours de sa fabrication, et plus particulièrement lors du frittage du matériau cermet.

La teneur en fer est maintenue faible, et peut être nulle, dans la phase métallique, car le fer sous forme métallique dans le matériau cermet a tendance à s'oxyder rapidement et à se dissoudre ensuite rapidement dans le bain cryolithique, engendrant des impuretés dans le bain et l'aluminium produit, ainsi que des porosités dans ledit matériau cermet.

L'ouvrage de référence intitulé « Inert anodes for aluminium electrolysis », 1ière édition de 2007, de loan Galasiu, Rodica Galasiu et Jomar Thonstad indique à la page 447 que pour des anodes inertes à base de ferrite de nickel, il convient qu'elles contiennent un excès de NiO du fait de la solubilité des Fe₂O₃ supérieure à celle de NiO. De manière tout à fait surprenante et avantageuse, le matériau cermet selon l'invention va à l'encontre de cet enseignement technique qui préconise un excès de NiO pour limiter la solubilité du fer dans le bain cryolithique pour de telles anodes. En effet, la composition du matériau cermet présente au contraire un excès de fer dans sa phase d'oxyde et l'on a constaté au cours de l'électrolyse que le fer de la phase d'oxyde ne polluait pas le bain de manière à rendre inappropriée l'utilisation du matériau cermet pour l'électrolyse.

Une limite supérieure de la teneur massique en fer dans la phase d'oxyde a été choisie de manière appropriée pour créer un oxyde de fer et nickel précurseur de la couche protectrice de ferrite de nickel et éviter de rendre cette phase du matériau cermet selon l'invention directement soluble dans le bain cryolithique. En effet, au cours de l'électrolyse et en surface de l'anode inerte, le fer est susceptible de donner lieu à la formation de Fe₂O₃ ou d'aluminates de fer ou encore de fluorures de fer qui se dissolvent dans le bain cryolithique.

La phase d'oxyde du matériau cermet va perdre un peu de fer au cours de l'électrolyse. Cependant, du fait que la phase métallique du matériau cermet est prédominante dans ce matériau, la quantité de fer totale de la phase oxyde reste faible, de sorte que la perte de fer au niveau du matériau cermet pris dans son ensemble n'est pas préjudiciable à la pureté du bain cryolithique et de l'aluminium produit.

Le nickel dans la phase d'oxyde du matériau cermet selon l'invention contribue à l'équilibre électronique dans ladite phase d'oxyde. Dans la phase d'oxyde, la teneur massique en nickel est choisie préférentiellement de manière à ce qu'elle soit minimale par rapport à la teneur massique en fer afin de limiter la pollution en nickel dans l'aluminium produit au cours de l'électrolyse, et ce du fait de l'inévitable faible dissolution de la phase d'oxyde mentionnée ci-dessus, en arrière de la couche protectrice de ferrite de nickel. Lorsque la phase d'oxyde est une phase monoxyde, le ratio de la teneur massique du nickel sur celle du fer peut être compris dans l'intervalle suivant : 0,004≤ Ni/Fe≤0,26, et lorsque la phase d'oxyde est une phase d'oxyde de ferrite de nickel, le ratio de la teneur massique du nickel sur celle du fer peut être compris dans l'intervalle suivant : 0,004≤Ni/Fe≤0,21.

De plus, au cours de l'électrolyse, le nickel provenant de l'oxydation de la phase métallique du matériau cermet selon l'invention, va être dissout dans la phase d'oxyde, du fait de la sous-stœchiométrie en nickel (autrement dit de sa faible teneur en nickel) de cette phase d'oxyde du matériau cermet selon l'invention. En effet, au cours de l'électrolyse, la composition du matériau cermet selon l'invention évolue pour tendre vers un équilibre de ses phases. En d'autres termes, la sous-stœchiométrie en nickel de la phase d'oxyde du matériau cermet a été choisie de manière adéquate pour provoquer le déplacement de nickel de la phase métallique vers la phase d'oxyde dans des conditions oxydantes.

Les matières premières à utiliser et les compositions associées des différentes phases du matériau cermet selon l'invention peuvent être calculées à l'aide d'un logiciel de thermodynamique et vérifiées expérimentalement via des mesures à la microsonde de Castaing ou par EDX (Energy Dispersive X-ray spectrometry) sur sections polies examinées au MEB (à savoir l'abréviation de « microscope électronique à balayage »).

Le matériau cermet selon l'invention peut être utilisé soit :
1) en tant que matériau monolithe d'une électrode, de préférence une anode inerte ; ledit matériau monolithe peut avoir été soumis préalablement à son immersion dans un bain cryolithique à un traitement de pré-oxydation (par exemple entre 900 °C et 1000 °C sous air pendant une durée comprise entre environ 2 et 10 heures),
2) en tant que matériau de revêtement, par exemple d'une épaisseur comprise entre environ 0,5 et 20 mm, sur un substrat métallique (autrement dit un cœur métallique), en vue de l'obtention d'une électrode, de préférence une anode inerte,
3) en tant que matériau d'une ou plusieurs couches intermédiaires entre un substrat métallique et un dépôt d'un matériau cermet riche en oxyde, c'est-à-dire ayant un pourcentage massique de phase oxyde plus important que le pourcentage massique de la phase oxyde du matériau cermet selon l'invention, ou d'un oxyde pur, l'ensemble constituant une électrode, de préférence une anode inerte.

Lorsque le matériau cermet selon l'invention est utilisé en tant que matériau de couche intermédiaire, il crée un gradient chimique et permet ainsi d'accommoder la dilatation des différents matériaux de l'électrode.

La présente invention a ainsi pour objet une électrode monolithe, de préférence une anode, constituée du matériau cermet selon l'invention tel que décrit ci-dessus.

La présente invention a pour autre objet une électrode, de préférence une anode, comprenant un cœur métallique recouvert en totalité ou partiellement d'au moins une couche d'un matériau cermet selon l'invention tel que décrit ci-dessus.

Dans un mode de réalisation de ladite électrode, la couche de matériau cermet selon l'invention est recouverte d'un dépôt d'un matériau cermet riche en oxyde ou d'un oxyde pur. La couche de matériau cermet selon l'invention est alors une couche intermédiaire telle que mentionnée ci-dessus. Ainsi, l'invention a pour objet une électrode qui se caractérise en ce que la couche de matériau cermet selon l'invention est une couche intermédiaire disposée entre le cœur métallique et une couche de matériau cermet riche en oxyde ou d'oxyde pur, que comprend en outre ladite électrode.

Dans ces modes de réalisation d'une électrode selon l'invention qui comprend un cœur métallique, ledit cœur métallique comprend avantageusement au moins un alliage de nickel (Ni) et de fer (Fe), les proportions massiques de Ni et de Fe étant les suivantes :
- 40 % ≤ Ni ≤ 85 %, de préférence 55 % ≤ Ni ≤ 80 %,
- 15 % ≤ Fe ≤ 60 %, de préférence 20 % ≤ Fe ≤ 45 %.

Ledit cœur métallique du matériau d'électrode peut en outre comprendre du cuivre (Cu) dans la proportion massique suivante 5 % ≤ Cu ≤ 40 %.

De manière avantageuse, les proportions massiques du cœur métallique sont les suivantes :
- 40 % ≤ Ni ≤ 70 % ;
- 20 % ≤ Fe ≤ 45 % ;
- 7 % ≤ Cu ≤ 20 %.

Le cœur métallique du matériau d'électrode peut en outre comprendre au moins un métal A choisi parmi l'aluminium (Al), le cobalt (Co), le chrome (Cr), le manganèse (Mn), le molybdène (Mo), le titane (Ti), le zirconium (Zr), l'étain (Sn), le vanadium (V), le niobium (Nb), le tantale (Ta) et l'hafnium (Hf) ou est une combinaison de ces métaux, la proportion massique en le métal A dans le cœur métallique étant la suivante : 0,5 % ≤ A ≤ 30 %.

De manière avantageuse, les proportions massiques du cœur métallique sont les suivantes :
- 40 % ≤ Ni ≤ 80 % ;
- 15 % ≤ Fe ≤ 40 % ;
- 0 ≤ Cu ≤ 20 % ;
- 0,5 % ≤ A ≤ 15%.

Le cœur métallique peut en outre comprendre au moins une terre rare, de préférence une terre rare choisie parmi l'yttrium (Y), le cérium (Ce), le lanthane (La) et le néodyme (Nd).

La terre rare représente jusqu'à 5 % de la masse du cœur métallique de l'électrode.

Une électrode selon l'invention qui comprend un matériau cermet et un cœur métallique tels que décrits ci-dessus présente les avantages suivants :
- Grâce à la composition du cœur métallique telle que décrite ci-dessus, le cœur métallique assure une bonne conductivité électrique et une bonne stabilité mécanique de l'électrode.
- Le pourcentage massique en fer compris entre 15 % et 60 % que comprend le cœur métallique est particulièrement adéquat pour que le cœur métallique puisse alimenter en fer le matériau cermet. En effet, au cours de l'électrolyse, la perte de fer du matériau cermet peut être compensée du fait que du fer va se déplacer du cœur métallique vers le matériau cermet (et ce du fait de phénomènes d'oxydation), notamment via des défauts cationiques dans les structures des oxydes que comprend ledit matériau cermet.
- Dans le cœur métallique, le nickel confère la réfractorité à l'alliage de Ni-Fe (à savoir le maintien mécanique en température) et sa résistance à l'oxydation.
- La composition du cœur métallique a été sélectionnée de telle sorte que la détérioration du cœur métallique par oxydation et/ou fluoration soit évitée.
- Le cœur métallique présente l'avantage de maintenir localement un potentiel réducteur qui contrecarre le potentiel oxydant du matériau cermet du côté du bain cryolithique, ledit potentiel oxydant étant lié à la réaction d'électrolyse dans le bain cryolithique dans lequel est immergée l'électrode selon l'invention.

De manière préférée, l'électrode décrite ci-dessus est une anode.

L'invention a aussi pour objet une cellule d'électrolyse comprenant au moins une électrode telle que décrite ci-dessus.

La présente invention a également pour objet un procédé de fabrication du matériau cermet tel que décrit ci-dessus consistant en un procédé de métallurgie des poudres ou en une technique de projection thermique, ledit procédé de fabrication se caractérisant en ce qu'il utilise comme matières premières au moins :
- du fer sous forme métallique ou en alliage, et optionnellement du cuivre et du nickel, sous forme métallique ou en alliage,
- un oxyde choisi parmi les oxydes de ferrite de nickel NiₓFe₃₋ₓO₄, NiO, Fe₂O₃, CuO, Cu₂O, CuFeO₂, le spinelle de type CuₓFe₃₋ₓO₄ avec 0 < x ≤ 1.

Dans un mode de réalisation du procédé de fabrication, une proportion majoritaire de cuivre est apportée sous forme d'oxyde afin de permettre la réaction de réduction de l'oxyde de cuivre en cuivre métallique. Le fer est avantageusement apporté sous forme métallique en quantité suffisante pour permettre la réduction totale de l'oxyde de cuivre en cuivre métal. Cette réaction solide-solide de réduction de l'oxyde de cuivre par le fer est à l'origine de la structure du matériau cermet selon l'invention constitué de deux réseaux entrelacés (ou autrement dit de deux phases percolantes) et de l'obtention d'une phase oxyde de fer et nickel riche en fer et pauvre en nickel.

Cet apport en oxygène pour la phase oxyde, via un oxyde de cuivre est préféré à un apport direct via un oxyde de fer du fait de l'organisation spatiale des phases oxydes et métalliques résultant de la réaction de réduction.

Avantageusement, 30 % à 100 % du cuivre est apporté sous forme d'oxyde de cuivre tels que CuO, Cu₂O, CuₓFe₃₋ₓO₄ avec 0 < x ≤ 1, CuFeO₂. Préférentiellement, plus de 50 % du cuivre, et encore plus préférentiellement plus de 80 % du cuivre, est apporté sous forme d'oxyde de cuivre.

Avantageusement, 30 % à 100 % du fer est apporté sous forme de fer métallique. Préférentiellement, plus de 50 % du fer, et encore plus préférentiellement plus de 80 % du fer, est apporté sous forme de fer métallique.

Ainsi, le matériau cermet selon l'invention peut par exemple être fabriqué à partir d'un procédé de métallurgie des poudres.

Dans le cas d'une fabrication par métallurgie des poudres, la réaction solide-solide de réduction de l'oxyde de cuivre par le fer se produit au cours du frittage du matériau après mélange et pressage des matières premières.

Une telle méthode de fabrication est notamment avantageuse lorsque le matériau cermet selon l'invention est destiné à être utilisé en tant que matériau monolithe d'une anode inerte pour l'électrolyse.

D'autres méthodes de fabrication du matériau cermet sont également envisageables, par exemple lorsque le matériau cermet est destiné à être appliqué sous la forme d'un revêtement sur un substrat métallique ou en fonction de la forme de l'anode inerte que l'on souhaite obtenir, ainsi que du nombre de couches, de leur composition et de leur épaisseur. Ces méthodes peuvent être utilisées séparément ou combinées entre elles.

Par exemple, le cœur métallique de l'anode inerte peut être fabriqué selon une méthode choisie parmi la coulée, le moulage (de préférence, le moulage à cire perdue ou le moulage en sable), ou une technique de transformation à chaud telle que le laminage, l'extrusion ou encore par métallurgie des poudres.

Ensuite, la ou les différentes couches de matériau cermet selon l'invention peuvent être appliquées sur le cœur métallique par une méthode choisie parmi :
- les méthodes de projection, par exemple :
   - projection plasma,
   - projection par flamme supersonique (HVOF, acronyme de « High Velocity Oxy-Fuel »),
   - projection haute pression par flamme supersonique (HPVOF, acronyme de « High-Pressure High Velocity Oxi-Fuel »),
   - projection par air supersonique (HVAF, acronyme de "High Velocity Air Fuel"),
   - canon à détonation,
   - projection à froid,
- les méthodes d'application de couches par métallurgie des poudres telles que le frittage naturel et le pressage isostatique à chaud.

Dans un mode de réalisation de l'invention dans lequel le cœur métallique est élaboré préalablement, la surface du cœur métallique est avantageusement soumise à un prétraitement de manière à éliminer les impuretés de coulée et à améliorer l'adhérence de la couche de matériau cermet selon l'invention.

Dans un mode de réalisation de l'invention, l'anode inerte peut également comprendre une ou plusieurs couches intermédiaires constituées du matériau cermet selon l'invention qui sont disposées entre le cœur métallique et une couche de matériau cermet riche en oxyde, ou d'un oxyde pur.

La couche intermédiaire formée du matériau cermet selon l'invention aide à accommoder les contraintes mécaniques dues aux différences de coefficients de dilatation du cœur métallique et de la couche de matériau cermet riche en oxyde, ou d'oxyde pur.

L'épaisseur de la couche intermédiaire peut être comprise entre une centaine de microns et un à plusieurs millimètres.

Cette anode inerte peut être fabriquée par co-frittage, fabrication additive ou encore en ayant recours à un procédé laser (par exemple le soudage laser ou le frittage laser).

A l'issue de la fabrication, le cœur métallique de l'anode est uniformément recouvert d'au moins une couche dense et adhérente d'un matériau cermet selon l'invention.

Lorsqu'on utilise le matériau cermet selon l'invention en tant que matériau d'anode monolithe ou bien qu'on le dépose sur un cœur métallique en vue d'obtenir une anode, on peut effectuer un traitement de pré-oxydation de manière à ce qu'il se forme à la surface dudit matériau cermet, et donc de l'anode inerte, la couche protectrice de ferrite de nickel dense, riche en nickel telle que détaillée ci-dessus et qui est peu soluble dans un bain cryolithique d'électrolyse.

Comme déjà expliqué, sans traitement de pré-oxydation, la couche protectrice va se former directement lors de l'introduction du matériau d'anode dans le bain cryolithique et du démarrage de l'électrolyse, qui créent des conditions favorables à l'oxydation de la surface du matériau d'anode.

### Description des figures :

La figure 1 est une photographie d'une observation par MEB en électrons rétrodiffusés d'une portion au cœur d'une anode monolithe constituée d'un matériau cermet selon l'invention après un traitement de pré-oxydation.
La figure 2 est une photographie d'une observation par MEB en électrons rétrodiffusés d'une portion à la surface de l'anode monolithe constituée d'un matériau cermet selon l'invention représentée à la figure 1.
La figure 3 est une photographie d'une observation par MEB en électrons rétrodiffusés d'une portion à la surface de l'anode monolithe constituée d'un matériau cermet selon l'invention qui est représentée en partie sur les photographies des figures 1 et 2, et ce après 96 heures d'électrolyse à un courant de 0,6 A/cm².
La figure 4 est une photographie d'une observation par MEB en électrons rétrodiffusés d'une portion à la surface de l'anode monolithe constituée d'un matériau cermet selon l'invention qui est représentée en partie sur les photographies des figures 1 et 2, et ce après 506 heures d'électrolyse à un courant de 0,8 A/cm².
La figure 5 est un graphe représentant l'épaisseur interne affectée de l'anode monolithe représentée en partie sur les figures 1 à 4 en fonction de la durée d'électrolyse.
La figure 6 est un graphe représentant la teneur en nickel exprimée en fonction de la teneur x des phases oxyde de ferrite de nickel de composition NiₓAl_{y}Fe_{3-x-y}O₄ et monoxyde de composition NiₓFe₁₋ₓO, ainsi que la teneur massique en nickel dans la phase métallique, et ce en fonction de la distance par rapport à la surface de l'anode monolithe représentée en partie sur les figures 1 à 4 après 211 heures d'électrolyse.
La figure 7 est un graphe représentant la teneur en nickel exprimée en fonction de la teneur x des phases oxyde de ferrite de nickel de composition NiₓAl_{y}Fe_{3-x-y}O₄ et monoxyde de composition NiₓFe₁₋ₓO, ainsi que la teneur massique en nickel dans la phase métallique, et ce en fonction de la distance par rapport à la surface de l'anode monolithe représentée en partie sur les figures 1 à 4 après 506 heures d'électrolyse.
La figure 8 est un graphe représentant le suivi des potentiels d'électrolyse pendant 506 heures de l'anode monolithe représentée en partie sur les figures 1 à 4.
La figure 9 est une photographie d'une observation par MEB en électrons rétrodiffusés d'une portion de la couche d'un matériau cermet selon l'invention que comprend une anode constituée d'un cœur métallique recouvert dudit matériau cermet après frittage.
La figure 10 est une photographie d'une observation par MEB en électrons rétrodiffusés de la même portion de la couche de matériau cermet représentée à la figure 9 après 230 heures d'électrolyse.

### Partie expérimentale :

Des matériaux cermet selon l'invention ont été préparés par le mélange des poudres et selon les proportions massiques suivantes :
- 12 % de NiFe₂O₄ ;
- 3 % de Cu ;
- 32 % de CuO ;
- 5 % de Ni ;
- 48 % d'un alliage de Ni-Fe (les teneurs massiques de nickel et de fer dans cet alliage étaient de 50 %).

Puis, un frittage a été effectué sous argon à 1250 °C de manière à obtenir des anodes monolithes constituées d'un matériau cermet selon l'invention.

Enfin, les anodes monolithes ainsi obtenues ont été soumises à un traitement de pré-oxydation sous air à 930 °C pendant 9 heures.

Pour l'ensemble des expérimentations effectuées sur lesdites anodes, les conditions d'électrolyse ont été les suivantes : un bain cryolithique avec un rapport cryolithique initial égal à 2,2 et contenant en pourcentages massiques 5 % de CaF₂, et 7,5 % d'alumine. Le rapport cryolithique est le ratio en pourcentages molaires de NaF sur AlF₃.

La température du bain a été maintenue à 960 °C et avec un courant de 0,6 A/cm² à 0,8 A/cm². Le potentiel d'électrolyse était stable avec un écart type de l'ordre de 0,25V incluant les variations de nappe de métal, pendant toute la durée des expérimentations.

Des observations des coupes des anodes après électrolyse, enrobage et découpe ont montré que l'intérieur desdites anodes a été très peu modifié, et ce après 96 heures, 211 heures et 506 heures d'électrolyse.

Ces observations témoignent de l'excellente tenue du matériau cermet selon l'invention lorsqu'il est utilisé comme anode inerte au cours d'une électrolyse, et ce sur des durées tout à fait remarquables (jusqu'à 506 heures). Ces expérimentations ont démontré tout l'intérêt industriel du matériau cermet selon l'invention.

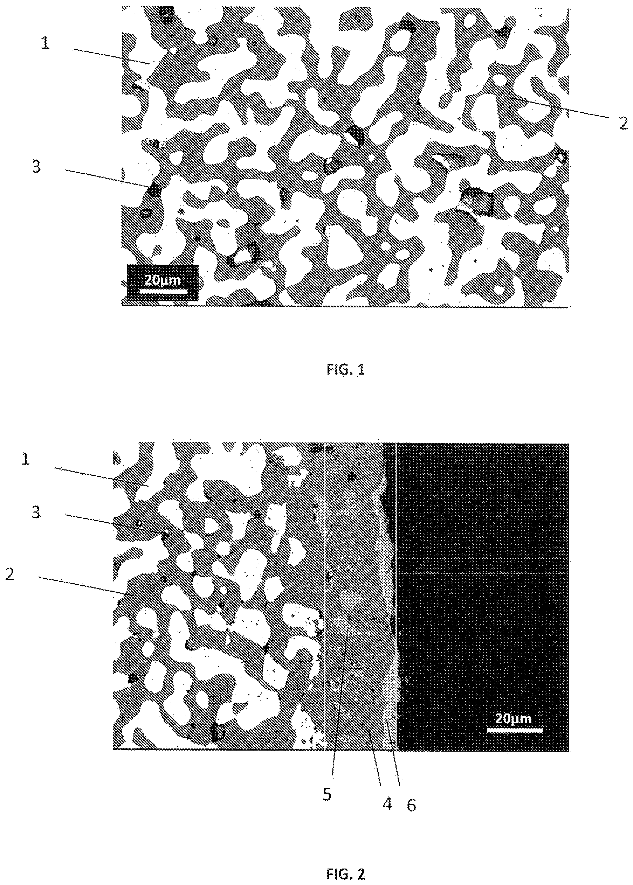

La figure 1 est une photographie d'une observation par MEB en électrons rétrodiffusés d'une portion au cœur d'une anode monolithe constituée d'un matériau cermet selon l'invention qui a été obtenu à partir du mélange de poudres et du frittage décrits ci-dessus et après un traitement de pré-oxydation.

La figure 2 est en effet une photographie d'une observation par MEB en électrons rétrodiffusés d'une portion en surface de l'anode monolithe représentée en partie sur la figure 1.

Sur les photographies des figures 1 et 2, on visualise les différentes phases en présence du matériau cermet :
- la phase 1 métallique d'alliage de nickel et de cuivre (les zones blanches),
- la phase 2 d'oxyde de ferrite de nickel NiₓFe₃₋ₓO₄ (les zones gris foncées),
- les porosités 3 (taches noires),

On visualise en plus sur la photographie de la figure 2 :
- une phase 5 monoxyde de NiₓFe₁₋ₓO (les zones gris clair),
- une phase 4 de ferrite de nickel de composition Ni_{0,9}Fe_{2,1}O₄ à la surface du matériau cermet (les zones gris foncé) qui correspond à la couche protectrice mentionnée ci-dessus,
- une phase 6 d'oxyde riche en cuivre.

Comme expliqué ci-dessus, la couche de ferrite de nickel qui se forme à la surface du matériau cermet selon l'invention est particulièrement avantageuse car elle est adhérente et cohérente ; ce qui contribue à l'excellente tenue dudit matériau cermet, et ce même dans des conditions agressives que sont par exemple celles d'un bain cryolithique utilisé au cours d'une électrolyse pour la fabrication d'aluminium.

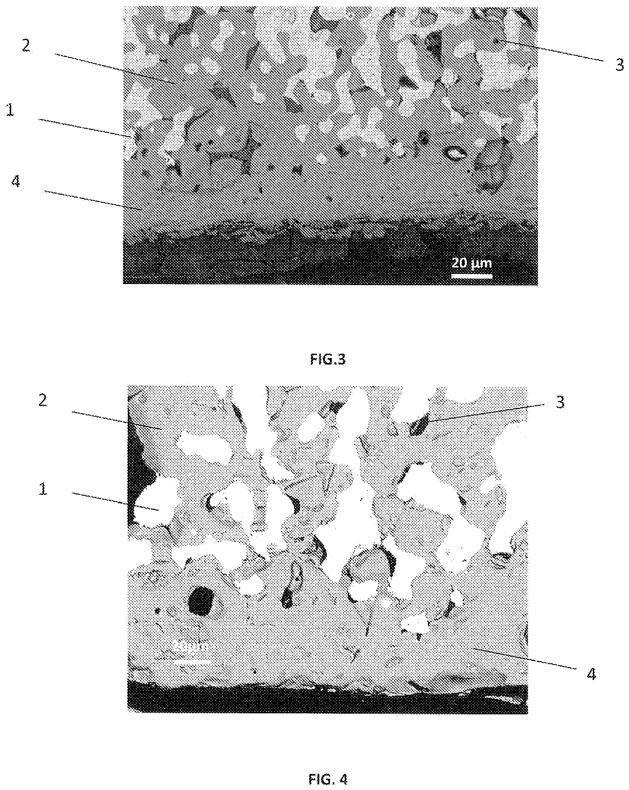

De plus, cette couche de ferrite de nickel va se renouveler en permanence durant l'électrolyse, et ce comme en témoignent les photographies des figures 3 et 4 qui sont des photographies d'une observation par MEB en électrons rétrodiffusés d'une portion de l'anode monolithe qui est représentée en partie sur les photographies des figures 1 et 2, respectivement après 96 heures et 506 heures d'électrolyse.

En effet, on distingue sur les figures 3 et 4 la couche protectrice de ferrite de nickel qui est adhérente sur le pourtour de l'anode. L'épaisseur de cette couche protectrice est d'environ 20 à 30 µm. Ainsi, après 96 heures d'électrolyse et même 506 heures, la couche protectrice de ferrite de nickel est toujours présente à la surface de l'anode avec une épaisseur sensiblement identique.

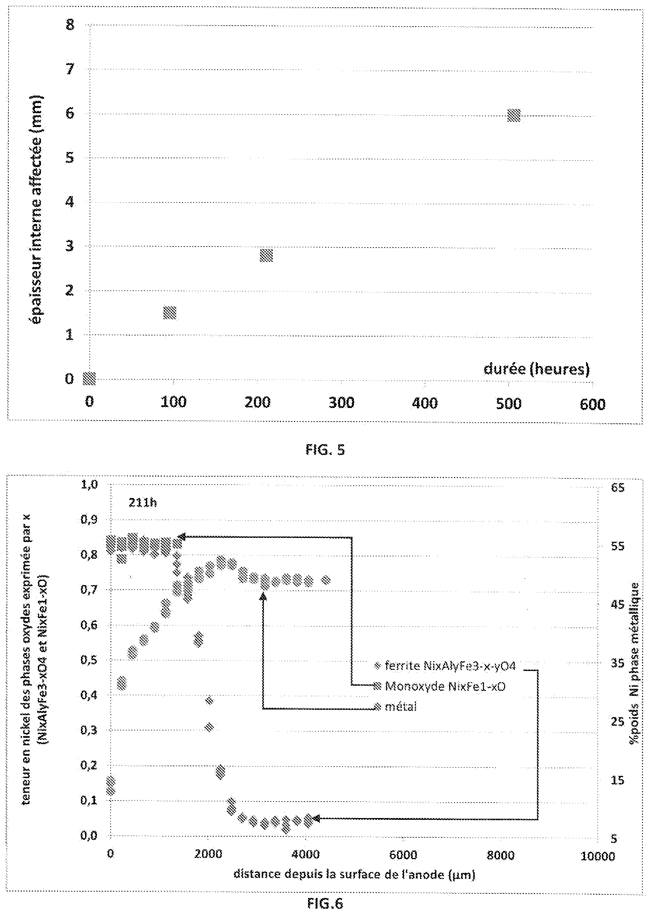

La figure 5 est un graphe représentant l'épaisseur interne affectée de l'anode monolithe représentée en partie sur les figures 1 à 4, et ce au cours de 506 heures d'électrolyse.

Par « épaisseur interne affectée », on entend l'épaisseur dans laquelle la composition du matériau est différente de la composition au cœur de l'anode, le cœur de l'anode correspondant à la composition initiale du matériau cermet avant électrolyse.

Au vu du graphe de la figure 5, on relève que l'épaisseur interne affectée évolue linéairement et faiblement à raison de 12 µm/heure au cours de 506 heures d'électrolyse. Ce graphe témoigne de l'excellente stabilité du matériau cermet selon l'invention qui est résistant dans des conditions agressives d'un bain cryolithique au cours d'une électrolyse. L'usure du matériau d'anode est très faible, inférieure à 0,2 mm après 506 heures d'électrolyse.

La figure 6 est un graphe représentant, après 211 heures d'électrolyse, la teneur en nickel exprimée en fonction de la teneur x des phases d'oxyde de ferrite de nickel de composition NiₓAl_{y}Fe_{3-x-y}O₄ et de monoxyde de composition NiₓFe₁₋ₓO, ainsi que la teneur massique en nickel dans la phase métallique, en fonction de la distance par rapport à la surface de l'anode monolithe représentée en partie sur les figures 1 à 4.

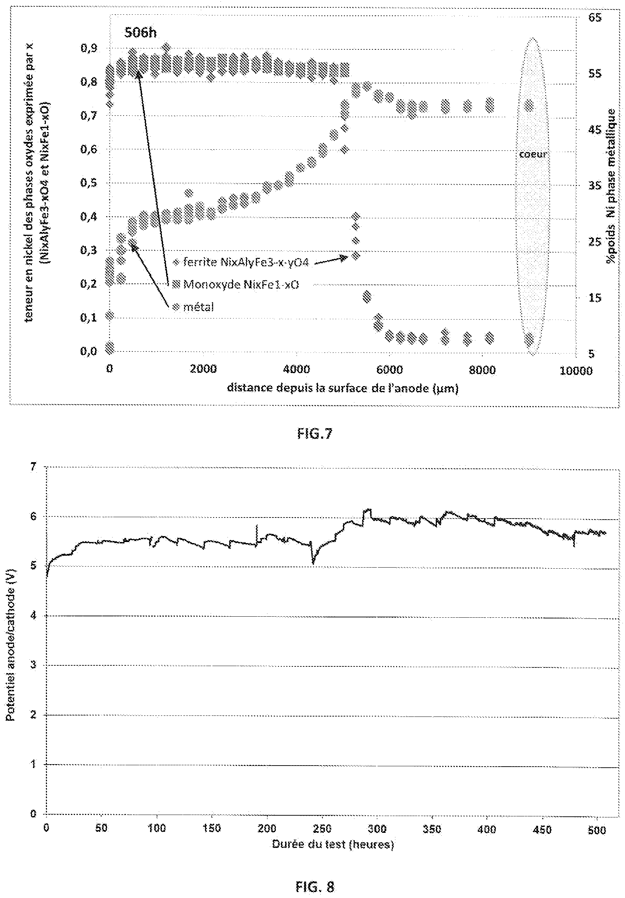

La figure 7 est un graphe représentant, après 506 heures d'électrolyse, la teneur en nickel exprimée en fonction de la teneur x des phases d'oxyde de ferrite de nickel de composition NiₓAl_{y}Fe_{3-x-y}O₄ et de monoxyde de composition NiₓFe₁₋ₓO, ainsi que la teneur massique en nickel dans la phase métallique, en fonction de la distance par rapport à la surface de l'anode monolithe représentée en partie sur les figures 1 à 4.

Au vu des graphes des figures 6 et 7, on relève que les profils des quantités de nickel dans les phases d'oxyde et dans la phase métallique sont comparables mais décalés vers le cœur de l'anode. Il y a ainsi un déplacement d'une certaine quantité de nickel de la phase métallique vers les phases oxydes, ceci d'autant plus profondément depuis la surface de l'anode que le temps d'électrolyse augmente.

La composition du cœur de l'anode reste inchangée. Le front de modification du matériau cermet tend à avancer lentement de la surface vers le cœur de l'anode et un palier de composition stable se forme en surface de l'anode.

Ces deux graphes des figures 6 et 7 témoignent que l'anode constituée d'un matériau cermet selon l'invention demeure stable au cours de l'électrolyse et est donc parfaitement adéquate pour son utilisation industrielle.

Comme cela est visible sur le graphe de la figure 7, la composition de la phase oxyde se stabilise en surface de l'anode avec une teneur plus importante en nickel, notamment une phase de ferrite de nickel NiₓAl_{y}Fe_{3-x-y}O₄ avec x proche de 0,9, rendant cette couche plus résistante à la corrosion par le bain cryolithique. Le nickel de la phase métallique rentre soit dans le ferrite de nickel, soit dans la phase monoxyde. Le nickel se dissout assez peu dans le bain cryolitique, ce que confirme le graphe des figures 6 et 7.

La figure 8 est un graphe représentant le suivi des potentiels d'électrolyse pendant 506 heures de l'anode monolithe représentée en partie sur les figures 1 à 4. On constate que l'anode a un comportement stable. L'avancée du front de modification n'influe pas sur le potentiel d'électrolyse, notamment du fait de la part importante de la phase métallique dans le matériau cermet qui maintient une conductivité élevée.

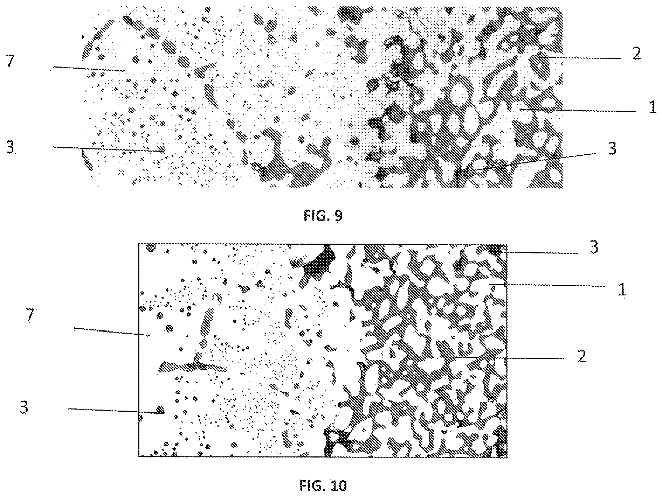

La figure 9 est une photographie d'une observation par MEB en électrons rétrodiffusés de l'interface entre le cœur métallique de composition Ni₆₅Fe₂₅Cu₁₀ et un matériau cermet selon l'invention d'une anode qui a été obtenue après frittage à 1200 °C. Le matériau cermet comprenait 68 % d'oxyde de ferrite de nickel de composition Ni_{0,04}Fe_{2,96}O₄ et 32 % de métal comprenant 50 % de Ni, 40 % de Cu et 10 % de Fer.

La figure 10 est une photographie d'une observation par MEB en électrons rétrodiffusés de cette interface représentée à la figure 9 après 230 heures d'électrolyse.

Sur les figures 9 et 10, on distingue la phase 7 du cœur métallique.

En comparant, les deux photographies des figures 9 et 10, on relève que l'interface cœur métallique-matériau cermet selon l'invention de l'anode est très similaire et qu'elle est donc demeurée stable après 230 heures d'électrolyse. L'interface est cohésive et il n'y a pas eu d'infiltration du bain après 230 heures d'électrolyse. Cela témoigne de la stabilité au cours de l'électrolyse d'une anode constituée d'un cœur métallique recouvert d'un matériau cermet selon l'invention.

De plus, aucun fluor n'a été identifié à l'interface. Cela signifie que l'anode n'a pas été attaquée par la corrosion après 230 heures d'électrolyse.

Ces résultats expérimentaux démontrent aussi tout l'intérêt industriel que représente le matériau cermet selon l'invention lorsqu'il est utilisé en tant que revêtement d'un cœur métallique d'une électrode, et notamment d'une anode. Un tel mode de réalisation peut être particulièrement avantageux pour augmenter la durée de vie de l'anode du fait de la régénération du matériau cermet au moyen d'une migration en fer du cœur métallique vers le matériau cermet.

## Revendications

1. Matériau cermet comprenant, en pourcentages massiques, au moins :
- 50 % à 90 %, de préférence 60 % à 80 %, d'une phase métallique (1) qui contient au moins un alliage de cuivre (Cu) et de nickel (Ni), ledit alliage comprenant en pourcentages massiques :
• 35 % à 75 %, de préférence 40 % à 60 %, plus préférentiellement 45 % à 55 %, de nickel,
• 25 % à 65 %, de préférence 40 % à 55 %, plus préférentiellement 45 % à 55 %, de cuivre,
- 10 % à 50 %, de préférence de 20 % à 40 %, d'une phase d'oxyde (2,5) comprenant :
- une phase monoxyde (5) de composition NiₓM_{y}Fe_{1-x-y}O avec les proportions massiques suivantes :
• 0,3 % ≤ Ni ≤ 17%,
• 60 % ≤ Fe ≤ 78%,
• 0 ≤ M ≤ 10%,
et/ou
- une phase d'oxyde de ferrite de nickel (2) de composition NiₓM_{y}Fe_{3-x-y}O₄ avec les proportions massiques suivantes :
• 0,2% ≤ Ni ≤ 13%,
• 60 % ≤ Fe ≤ 72 %,
• 0 ≤ M ≤ 8%,
M étant un métal choisi parmi l'aluminium (Al), le cobalt (Co), le chrome (Cr), le cuivre (Cu), le manganèse (Mn), le titane (Ti), le zirconium (Zr), l'étain (Sn), le vanadium (V), le niobium (Nb), le tantale (Ta), l'yttrium (Y), l'hafnium (Hf), ou une combinaison de ces métaux.

2. Matériau cermet selon la revendication 1, **caractérisé en ce que** l'alliage de cuivre (Cu) et de Nickel (Ni) comprend du fer (Fe), le pourcentage massique de fer dans ledit alliage n'excédant pas 20 %, de préférence ledit pourcentage massique de fer est compris entre 2 % et 15 %, et plus préférentiellement compris entre 4 % et 10%.

3. Matériau cermet selon la revendication 1 ou 2, **caractérisé en ce que** lorsque ladite phase d'oxyde comprend une phase d'oxyde de ferrite de nickel (2), ladite phase d'oxyde de ferrite de nickel (2) est de composition NiₓM_{y}Fe_{3-x-y}O₄ avec les proportions massiques suivantes :
- 0,2 % ≤ Ni ≤ 10%, préférentiellement 0,2 % ≤ Ni ≤ 5 %,
- 63 % ≤ Fe ≤ 72 %, préférentiellement 68 % ≤ Fe ≤ 72 %,
- 0 ≤ M ≤ 4 %, préférentiellement 0 ≤ M ≤ 2 %.

4. Matériau cermet selon la revendication 1 ou 2, **caractérisé en ce que** lorsque la phase d'oxyde du matériau cermet comprend une phase monoxyde (5), ladite phase monoxyde (5) est de composition NiₓM_{y}Fe_{1-x-y}O avec les proportions massiques suivantes :
- 0,3 % ≤ Ni ≤ 13 %, préférentiellement 0,3 % ≤ Ni ≤ 8 %,
- 65 % ≤ Fe ≤ 78 %, préférentiellement 70 % ≤ Fe ≤ 78 %,
- 0 ≤ M ≤ 4 %, préférentiellement 0 ≤ M ≤ 2 %.

5. Matériau cermet selon l'une quelconque des revendications 1 à 4, **caractérisé en ce que** la phase métallique (1) comprend en outre au moins une terre rare choisie parmi l'yttrium (Y), le cérium (Ce), le lanthane (La) et le néodyme (Nd).

6. Matériau cermet traité constitué d'un matériau cermet selon l'une quelconque des revendications 2 à 5 qui est revêtu en totalité ou partiellement d'une couche protectrice (4) de composition Ni_{0,9}M_{y}Fe_{2,1-y}O₄ obtenu après un traitement de pré-oxydation d'un matériau cermet selon l'une quelconque des revendications 2 à 5.

7. Matériau cermet traité selon la revendication 6, **caractérisé en ce que** le traitement de pré-oxydation est réalisé sous air entre 900 °C et 1000 °C pendant une durée comprise entre 2 et 10 heures.

8. Matériau cermet traité selon la revendication 6 ou 7, **caractérisé en ce que** l'épaisseur de la couche protectrice (4) est comprise entre 15 et 30 µm.

9. Electrode comprenant un cœur métallique recouvert en totalité ou partiellement d'au moins une couche :
- d'un matériau cermet selon l'une quelconque des revendications 1 à 5, ou
- d'un matériau cermet traité selon l'une quelconque des revendications 6 à 8.

10. Electrode selon la revendication 9, **caractérisée en ce que** ledit cœur métallique comprend au moins un alliage de nickel (Ni) et de fer (Fe), les proportions massiques de Ni et de Fe étant les suivantes :
- 40 % ≤ Ni ≤ 85 %, de préférence 55 % ≤ Ni ≤ 80 %,
- 15 % ≤ Fe ≤ 60 %, de préférence 20 % ≤ Fe ≤ 45 %.

11. Electrode selon la revendication 10, **caractérisée en ce que** ledit cœur métallique comprend en outre du cuivre (Cu) dans la proportion massique suivante : 5 % ≤ Cu ≤ 40 %.

12. Electrode selon l'une quelconque des revendications 9 à 11, **caractérisée en ce que** le cœur métallique du matériau d'électrode comprend en outre au moins un métal A choisi parmi l'aluminium (Al), le cobalt (Co), le chrome (Cr), le manganèse (Mn), le molybdène (Mo), le titane (Ti), le zirconium (Zr), l'étain (Sn), le vanadium (V), le niobium (Nb), le tantale (Ta) et l'hafnium (Hf) ou est une combinaison de ces métaux, la proportion massique en le métal A dans le cœur métallique étant la suivante : 0,5 % ≤ A ≤ 30 %.

13. Electrode selon l'une quelconque des revendications 9 à 12, **caractérisée en ce que** le cœur métallique comprend en outre au moins une terre rare choisie parmi l'yttrium (Y), le cérium (Ce), le lanthane (La) et le néodyme (Nd).

14. Electrode selon l'une quelconque des revendications 9 à 13, **caractérisée en ce que** ladite couche de matériau cermet selon l'une quelconque des revendications 1 à 5 ou ladite couche de matériau cermet traité selon l'une quelconque des revendications 6 à 8 est une couche intermédiaire disposée entre le cœur métallique et une couche de matériau cermet riche en oxyde ou d'oxyde pur, que comprend en outre ladite électrode.

15. Procédé de fabrication d'un matériau cermet selon l'une quelconque des revendications 1 à 5 consistant en un procédé de métallurgie des poudres ou en une technique de projection thermique, **caractérisé en ce que** ledit procédé de fabrication utilise comme matières premières au moins :
- du fer sous forme métallique ou en alliage, et optionnellement du cuivre et du nickel, sous forme métallique ou en alliage,
- un oxyde choisi parmi les oxydes de ferrite de nickel NiₓFe₃₋ₓO₄, NiO, Fe₂O₃, CuO, Cu₂O, CuFeO₂, le spinelle de type CuₓFe₃₋ₓO₄ avec 0 < x ≤ 1.

16. Procédé de fabrication selon la revendication 15, **caractérisé en ce qu'**entre 30 % et 100 % du cuivre est apporté sous forme d'un oxyde.

17. Procédé de fabrication selon la revendication 15 ou 16, **caractérisé en ce qu'**entre 30 % et 100 % du fer est apporté sous forme de fer métallique.

## Patentansprüche

1. Cermetmaterial, das in Massenprozent mindestens umfasst:
- 50 % bis 90 %, vorzugsweise 60 % bis 80 %, einer metallischen Phase (1), die mindestens eine Legierung aus Kupfer (Cu) und aus Nickel (Ni) enthält, wobei die Legierung in Massenprozent umfasst:
• 35 % bis 75 %, vorzugsweise 40 % bis 60 %, bevorzugter 45 % bis 55 % Nickel,
• 25 % bis 65 %, vorzugsweise 40 % bis 55 %, bevorzugter 45 % bis 55 % Kupfer,
- 10% bis 50 %, vorzugsweise 20 % bis 40 %, einer Oxidphase (2, 5), die umfasst:
- eine Monoxidphase (5) mit der Zusammensetzung NiₓM_{y}Fe_{1-x-y}O mit den folgenden Massenanteilen:
• 0,3 % ≤ Ni ≤ 17 %,
• 60 % ≤ Fe ≤ 78 %,
• 0 ≤ M ≤ 10%,
und/oder
- eine Nickelferrit-Oxidphase (2) mit der Zusammensetzung NiₓM_{y}Fe_{3-x-y}O₄ mit den folgenden Massenanteilen:
• 0,2 % ≤ Ni ≤ 13 %,
• 60 % ≤ Fe ≤ 72 %,
• 0 ≤ M ≤ 8 %,
wobei M ein Metall ist, das unter Aluminium (AI), Kobalt (Co), Chrom (Cr), Kupfer (Cu), Mangan (Mn), Titan (Ti), Zirconium (Zr), Zinn (Sn), Vanadium (V), Niob (Nb), Tantal (Ta), Yttrium (Y), Hafnium (Hf) gewählt oder eine Kombination von diesen Metallen ist.

2. Cermetmaterial nach Anspruch 1, **dadurch gekennzeichnet, dass** die Legierung aus Kupfer (Cu) und aus Nickel (Ni) Eisen (Fe) umfasst, wobei der Massenprozentsatz an Eisen in der Legierung 20 % nicht überschreitet, wobei der Massenprozentsatz an Eisen vorzugsweise zwischen 2 % und 15 % beträgt und mehr zu bevorzugen zwischen 4 % und 10 % beträgt.

3. Cermetmaterial nach Anspruch 1 oder 2, **dadurch gekennzeichnet, dass**, wenn die Oxidphase eine Nickelferrit-Oxidphase (2) umfasst, die Nickelferrit-Oxidphase (2) die Zusammensetzung NiₓM_{y}Fe_{3-x-y}O₄ mit den folgenden Massenanteilen aufweist:
- 0,2 % ≤ Ni ≤ 10 %, vorzugsweise 0,2 % ≤ Ni ≤ 5 %,
- 63 % ≤ Fe ≤ 72 %, vorzugsweise 68 % ≤ Fe ≤ 72 %,
- 0 ≤ M ≤ 4 %, vorzugsweise 0 ≤ M ≤ 2 %.

4. Cermetmaterial nach Anspruch 1 oder 2, **dadurch gekennzeichnet, dass**, wenn die Oxidphase des Cermetmaterials eine Monoxidphase (5) umfasst, die Monoxidphase (5) die Zusammensetzung NiₓM_{y}Fe_{1-x-y}O mit den folgenden Massenanteilen aufweist:
- 0,3 % ≤ Ni ≤ 13 %, vorzugsweise 0,3 % ≤ Ni ≤ 8 %,
- 65 % ≤ Fe ≤ 78 %, vorzugsweise 70 % ≤ Fe ≤ 78 %,
- 0 ≤ M ≤ 4 %, vorzugsweise 0 ≤ M ≤ 2.

5. Cermetmaterial nach einem der Ansprüche 1 bis 4, **dadurch gekennzeichnet, dass** die metallische Phase (1) ferner mindestens eine Seltene Erde umfasst, die unter Yttrium (Y), Cerium (Ce), Lanthan (La) und Neodym (Nd) gewählt ist.

6. Behandeltes Cermetmaterial, das aus einem Cermetmaterial nach einem der Ansprüche 2 bis 5 besteht, das vollständig oder teilweise mit einer Schutzschicht (4) mit der Zusammensetzung Ni_{0,9}M_{y}Fe_{2,1-y}O₄ beschichtet ist, die nach einer Voroxidationsbehandlung eines Cermetmaterials nach einem der Ansprüche 2 bis 5 erhalten wird.

7. Behandeltes Cermetmaterial nach Anspruch 6, **dadurch gekennzeichnet, dass** die Voroxidationsbehandlung in Luft zwischen 900 °C und 1000 °C während einer Dauer ausgeführt wird, die zwischen 2 und 10 Stunden beträgt.

8. Behandeltes Cermetmaterial nach Anspruch 6 oder 7, **dadurch gekennzeichnet, dass** die Dicke der Schutzschicht (4) zwischen 15 und 30 µm beträgt.

9. Elektrode, die einen metallischen Kern umfasst, der vollständig oder teilweise mit mindestens einer Schicht beschichtet ist aus:
- einem Cermetmaterial nach einem der Ansprüche 1 bis 5, oder
- einem behandelten Cermetmaterial nach einem der Ansprüche 6 bis 8.

10. Elektrode nach Anspruch 9, **dadurch gekennzeichnet, dass** der metallische Kern mindestens eine Legierung aus Nickel (Ni) und aus Eisen (Fe) umfasst, wobei die Massenanteile von Ni und von Fe die folgenden sind:
- 40 % ≤ Ni ≤ 85 %, vorzugsweise 55 % ≤ Ni ≤ 80 %,
- 15 % ≤ Fe ≤ 60 %, vorzugsweise 20 % ≤ Fe ≤ 45 %.

11. Elektrode nach Anspruch 10, **dadurch gekennzeichnet, dass** der metallische Kern ferner Kupfer (Cu) mit dem folgenden Massenanteil umfasst: 5 % ≤ Cu ≤ 40 %.

12. Elektrode nach einem der Ansprüche 9 bis 11, **dadurch gekennzeichnet, dass** der metallische Kern des Elektrodenmaterials ferner mindestens ein Metall A umfasst, das unter Aluminium (AI), Kobalt (Co), Chrom (Cr), Mangan (Mn), Molybdän (Mo), Titan (Ti), Zirconium (Zr), Zinn (Sn), Vanadium (V), Niob (Nb), Tantal (Ta) und Hafnium (Hf) gewählt ist oder eine Kombination von diesen Metallen ist, wobei der Massenanteil des Metalls A in dem metallischen Kern der folgende ist: 0,5 % ≤ A ≤ 30 %.

13. Elektrode nach einem der Ansprüche 9 bis 12, **dadurch gekennzeichnet, dass** der metallische Kern ferner mindestens eine Seltene Erde umfasst, die unter Yttrium (Y), Cerium (Ce), Lanthan (La) und Neodym (Nd) gewählt ist.

14. Elektrode nach einem der Ansprüche 9 bis 13, **dadurch gekennzeichnet, dass** die Schicht aus Cermetmaterial nach einem der Ansprüche 1 bis 5 oder die Schicht aus behandeltem Cermetmaterial nach einem der Ansprüche 6 bis 8 eine Zwischenschicht ist, die zwischen dem metallischen Kern und einer Cermetmaterialschicht angeordnet ist, die reich an Oxid oder aus reinem Oxid ist und welche die Elektrode ferner umfasst.

15. Verfahren zur Herstellung eines Cermetmaterials nach einem der Ansprüche 1 bis 5, das aus einem Verfahren zur Metallverarbeitung der Pulver oder aus einer thermischen Spritztechnik besteht, **dadurch gekennzeichnet, dass** das Verfahren zur Herstellung als Rohstoffe mindestens verwendet:
- Eisen in metallischer Form oder als Legierung und wahlweise Kupfer und Nickel in metallischer Form oder als Legierung,
- ein Oxid, das unter den Nickelferritoxiden NiₓFe₃₋ₓO₄, NiO, Fe₂O₃, CuO, CU₂O, CuFeO₂, Spinell vom Typ CuₓFe₃₋ₓO₄ mit 0 < x ≤ 1, gewählt ist.

16. Verfahren zur Herstellung nach Anspruch 15, **dadurch gekennzeichnet, dass** zwischen 30 % und 100 % des Kupfers in der Form eines Oxids eingebracht werden.

17. Verfahren zur Herstellung nach Anspruch 15 oder 16, **dadurch gekennzeichnet, dass** zwischen 30 % und 100 % des Eisens in der Form von metallischem Eisen eingebracht werden.

## Claims

1. Cermet material comprising, as mass percentages, at least:
- 50% to 90%, preferably 60% to 80%, of a metallic phase (1) which contains at least one alloy of copper (Cu) and nickel (Ni), said alloy comprising as percentages by mass:
• 35% to 75%, preferably 40% to 60%, more preferably 45% to 55%, of nickel,
• 25% to 65%, preferably 40% to 55%, more preferably 45% to 55%, of copper,
- 10% to 50%, preferably 20% to 40%, of an oxide phase (2,5) containing:
- a monoxide phase (5) of composition NiₓM_{y}Fe_{1-x-y}O with the following proportions by mass:
• 0,3% ≤ Ni ≤ 17%,
• 60% ≤ Fe ≤ 78%,
• 0 ≤ M ≤ 10%,
and/or
- a nickel ferrite oxide phase (2) of composition NiₓM_{y}Fe_{3-1-y}O₄ with the following proportions by mass:
• 0,2% ≤ Ni ≤ 13%,
• 60% S Fe ≤ 72%,
• 0 ≤ M ≤ 8%,
M being a metal selected from aluminum (Al), cobalt (Co), chromium (Cr), copper (Cu), manganese (Mn), titanium (Ti), zirconium (Zr), tin (Sn), vanadium (V), niobium (Nb), tantalum (Ta), yttrium (Y), hafnium (Hf) or a combination of these metals.

2. Cermet material according to claim 1, **characterized in that** the alloy of copper (Cu) and nickel (Ni) contains iron (Fe), the mass percentage of iron in said alloy not exceeding 20%, preferably said mass percentage of iron is between 2% and 15%, and more preferably between 4% and 10%.

3. Cermet material according to claim 1 or 2, **characterized in that** when said oxide phase comprises a nickel ferrite oxide phase (2), said nickel oxide ferrite phase (2) is of composition NiₓM_{y}Fe_{3-x-y}O₄ with the following mass proportions:
- 0,2% ≤ Ni ≤ 10%, preferably 0,2% ≤ Ni ≤ 5%,
- 63% ≤ Fe ≤ 72%, preferably 68% ≤ Fe ≤ 72%,
- 0 ≤ M ≤ 4%, preferably 0 ≤ M ≤ 2%.

4. Cermet material according to claim 1 or 2, **characterized in that** when the oxide phase of the cermet material comprises a monoxide phase (5), said monoxide phase (5) is of composition NiₓM_{y}Fe_{1-x-y}O with the following mass proportions:
- 0,3% ≤ Ni ≤ 13%, preferably 0,3% ≤ Ni ≤ 8%,
- 65% ≤ Fe ≤ 78%, preferably 70% ≤ Fe ≤ 78%,
- 0 ≤ M ≤ 4%, preferably 0 ≤ M ≤ 2%.

5. Cermet material according to any one of claims 1 to 4, **characterized in that** the metallic phase (1) comprises at least one rare earth element selected from yttrium (Y), cerium (Ce), lanthanum (La) and neodymium (Nd).

6. Processed cermet material comprising a cermet material according to any one of claims 2 to 5 which is coated completely or partially with a protective layer (4) of composition Ni_{0,9}M_{y}Fe_{2,1-y}O₄ obtained after pre-oxidation treatment of a cermet material according to any one of claims 2 to 5.

7. Processed cermet material according to claim 6, **characterized in that** the pre-oxidation treatment is carried out in air between 900°C and 1000°C for a time between 2 and 10 hours.

8. Processed cermet material according to claim 6 or 7, **characterized in that** a thickness of the protective layer (4) is between 15 and 30 µm.

9. Electrode comprising a metallic core covered wholly or partially by at least one layer:
- of a cermet material according to any one of claims 1 to 5, or
- of a processed cermet material according to any one of claims 6 to 8.

10. Electrode according to claim 9, **characterized in that** said metallic core comprises at least one alloy of nickel (Ni) and iron (Fe), with proportions by mass of Ni and Fe being the following:
- 40% ≤ Ni ≤ 85%, preferably 55% ≤ Ni ≤ 80%,
- 15% ≤ Fe ≤ 60%, preferably 20% ≤ Fe ≤ 45%.

11. Electrode according to claim 10, **characterized in that** said metallic core further comprises copper (Cu) in the following mass proportion: 5% ≤ Cu ≤ 40%.

12. Electrode according to any one of claims 9 to 11, **characterized in that** the metallic core of the electrode material comprises at least one metal A chosen from aluminum (Al), cobalt (Co), chromium (Cr), manganese (Mn), molybdenum (Mo), titanium (Ti), zirconium (Zr), tin (Sn), vanadium (V), niobium (Nb), tantalum (Ta), and hafnium (Hf) or a combination of these metals, the proportion by mass of metal A in the metallic core being as follows: 0,5% ≤ A ≤ 30%.

13. Electrode according to any one of claims 9 to 12, **characterized in that** the metallic core further comprises at least one rare earth element selected from yttrium (Y), cerium (Ce), lanthanum (La) and neodymium (Nd).

14. Electrode according to any one of claims 9 to 13, **characterized in that** said layer of cermet material according to any one of claims 1 to 5 or said layer of processed cermet material according to any one of claims 6 to 8 is an intermediate layer arranged between the metallic core and a layer cermet material rich in oxide or of pure oxide, which further comprises said electrode.

15. Process of manufacturing a cermet material according to any one of claims 1 to 5 consisting of a powder metallurgy method or a thermal spraying technique, **characterized in that** said manufacturing process uses as raw materials at least:
- iron in metallic form or as an alloy, and optionally copper and nickel, in metallic form or as an alloy,
- an oxide selected from nickel ferrite oxides NiₓFe₃₋ₓO₄, NiO, Fe₂O₃, CuO, Cu₂O, CuFeO₂, the spinel of type CuₓFe₃₋ₓO₄ with 0 < x ≤ 1.

16. Process of manufacturing according to claim 15, **characterized in that** between 30% and 100% of the copper is supplied in the form of an oxide.

17. Process of manufacturing according to claim 15 or 16, **characterized in that** between 30% and 100% of the iron is supplied in the form metallic iron.
